# EUROPEAN PATENT APPLICATION

(11) **EP 1 906 586 A1**
(43) Date of publication of application: **02.04.2008**
(21) Application number: 07117185.4
(22) Date of filing: 25.09.2007
(51) Int. Cl.: H04L 9/32, H04L 29/06

(54) **Cryptographic authentication protocol**

(30) Priority: 27.09.2006 US 535773
(71) Applicant: Rockwell Automation Technologies, Inc., Mayfield Heights, OH 44124 (US)
(72) Inventor: Schulz, Glenn B., Lannon, WI 53046 (US)
(74) Representative: Englaender, Klaus

(57) **Abstract**

An authentication protocol for an industrial automation system is provided. This includes at least one industrial control component that communicates security information across a network. At least one protocol component is provided that employs mutual authentication data that is based in part on a private session key exchange to facilitate authentication of the industrial control component via the network.

## Description

### TECHNICAL FIELD

The subject invention relates generally to industrial control systems and more particularly to providing a lightweight authentication protocol for industrial control systems that is resistant to commonly known attacks for public key authentication methods.

### BACKGROUND

Industrial controllers historically have operated in tightly-controlled factory networks were a plurality of controllers and associated modules communicate. These lower level control elements often are in communication with higher level computing systems or servers that aggregate data from the controllers and help to manage day-to-day activities of an enterprise. In recent years however, control systems have increasingly become adapted for Ethernet communications which have opened these systems up to global networks such as the Internet. While it is advantageous for control systems to communicate across such global networks, other problems have ensued such as how to protect sensitive control systems and related intellectual property stored thereon from corruption or worse - cyber attack. Until now, various methods have been employed to authenticate network parties that need to communicate to control systems over public networks. Some of these authentication methods include RADIUS and Kerberos authentication schemes which are described in further detail below.

When a client is configured for RADIUS, any user of the client presents authentication information to the client. This may be with a customizable login prompt, where the user is expected to enter their username and password. Alternatively, the user may use a link framing protocol such as a Point-to-Point Protocol (PPP), which has authentication packets which carry this information. When the client has obtained such information, it may decide to authenticate using RADIUS. To do so, the client creates an "Access-Request" containing such Attributes as the user's name, the user's password, the ID of the client and the Port ID which the user attempts to access. When a password is present, it is hidden using a method based on a Rivest-Shamir-Adleman Encryption Algorithm (RSA) which can include a Message Digest Algorithm (MD5).

Generally, the Access-Request is submitted to the RADIUS server via the network. If no response is returned within a length of time, the request is re-sent a number of times. The client can also forward requests to an alternate server or servers in the event that the primary server is down or unreachable. An alternate server can be used either after a number of tries to the primary server fail, or in a round-robin manner. When the RADIUS server receives the request, it validates the sending client. A request from a client for which the RADIUS server does not have a shared secret is silently discarded. If the client is valid, the RADIUS server consults a database of users to find the user whose name matches the request. The user entry in the database contains a list of requirements which must be met to allow access for the user, This includes verification of the password, but can also specify the client(s) or port(s) to which the user is allowed access.

In challenge/response authentication, the user is given an unpredictable number and challenged to encrypt it and give back the result. Authorized users are equipped with special devices such as smart cards or software that facilitate calculation of the correct response with ease. Unauthorized users, lacking the appropriate device or software and lacking knowledge of the secret key necessary to emulate such a device or software can only guess at the response. The Access-Challenge packet typically contains a Reply-Message including a challenge to be displayed to the user, such as a numeric value unlikely to be repeated. Typically this is obtained from an external server that knows what type of authenticator is in the possession of the authorized user and can therefore choose a random or non-repeating pseudorandom number of an appropriate radix and length.

The user then enters the challenge into his device (or software) and it calculates a response, which the user enters into the client which forwards it to the RADIUS server via a second Access-Request. If the response matches the expected response the RADIUS server replies with an Access-Accept, otherwise an Access-Reject. For PAP protocols, the server takes the PAP ID and password and sends them in an Access-Request packet as the User-Name and User-Password. The server may include an Attributes Service-Type = Framed-User and Framed-Protocol = PPP as a hint to the RADIUS server that PPP service is expected. For CHAP protocols, the server generates a random challenge (preferably 16 octets) and sends it to the user, who returns a CHAP response along with a CHAP ID and CHAP username.

Kerberos is an authentication service developed by the Project Athena team at MIT. Kerberos employs secret-key ciphers for encryption and authentication. Unlike a public-key authentication system, Kerberos does not produce digital signatures. Instead, Kerberos was designed to authenticate requests for network resources rather than to authenticate authorship of documents. In a Kerberos system, there is a designated site on each network, called the Kerberos server, which performs centralized key management and administrative functions. The server maintains a database containing the secret keys of all users, authenticates the identities of users, and distributes session keys to users and servers that desire to authenticate one another. Kerberos requires trust in a third party (the Kerberos server). If the server is compromised, the integrity of the system is lost. Unfortunately, RADIUS, Kerberos, and other authentication schemes can be subject to network protocol attack that is unacceptable for sensitive industrial control applications. Another problem is that there may be large overhead associated with some of these authentication methods which may hinder the real time performance of the industrial control system.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

A lightweight industrial protocol is provided to enable authentication between industrial control components and/or users of the components, to mitigate network protocol attacks, and to facilitate system performance of the components. In one aspect, a cryptographic authentication protocol is provided that employs a mutual authentication scheme based in part on a symmetric key system that generally does not require a public key infrastructure to be present. The protocol is such that it is resistant to commonly known attacks for this class of protocol. Additional features are provided that allow the protocol to be used to negotiate private sessions keys and encryption of subsequent transmissions. In this manner, a cryptographic based authentication protocol provides a technical barrier to unauthorized applications and devices participating in an industrial automation architecture that includes controllers, I/O modules, factory devices, computers, servers, clients, and/or other network components.

By employing private components within the protocol, industrial components can be hardened to mitigate RSA protocol attacks. Other aspects of the protocol are that it does not require a public key infrastructure, (PKI), supports a plurality of participants, utilizes a unique nonce structure to avoid replay or determinism, negotiates session keys and encryption, requires a limited set of cryptographic primitives to construct the protocol where a certificate revocation can be self administered, and mutual authentication is provided. The lightweight and private nature provides a more secure authentication solution for industrial automation systems over other public and possibly more complex authentication protocols.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

Fig. 1 is a schematic block diagram illustrating a cryptographic authentication component for an industrial automation system.

Fig. 2 is a diagram illustrating components of an authentication protocol.

Fig. 3 is a diagram illustrating authorizing and licensing considerations for an authentication protocol.

Fig. 4 is a flow diagram illustrating general authentication protocol exchange process.

Fig. 5 is a flow diagram illustrating a process for exchanging certificates between entities.

Fig. 6 is a flow diagram illustrating a process for nonce exchange and confirmation between entities.

Fig. 7 is a diagram illustrating a nonce concatenation to form a symmetric session key.

Fig. 8 illustrates exemplary authentication protocol enhancements.

Fig. 9 illustrates exemplary key management aspects for an industrial authentication protocol.

Fig. 10 illustrates miscellaneous security considerations for an industrial authentication protocol.

### DETAILED DESCRIPTION

An authentication protocol for an industrial automation system is provided. This includes at least one industrial control component that communicates security information across a network. Such networks can be public or private and are employed to communicate the security information including lightweight cryptographic data which is exchanged on the network to authenticate various components of the automation system. At least one protocol component is provided that employs mutual authentication data that is based in part on a private key exchange to facilitate authentication of the industrial control component via the network, where the private key exchange can be a symmetric key exchange. By employing an architecture that is not based substantially on public key exchanges or trusted third parties, the protocol component mitigates protocol attacks.

It is noted that as used in this application, terms such as "component," "protocol," "model, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith.

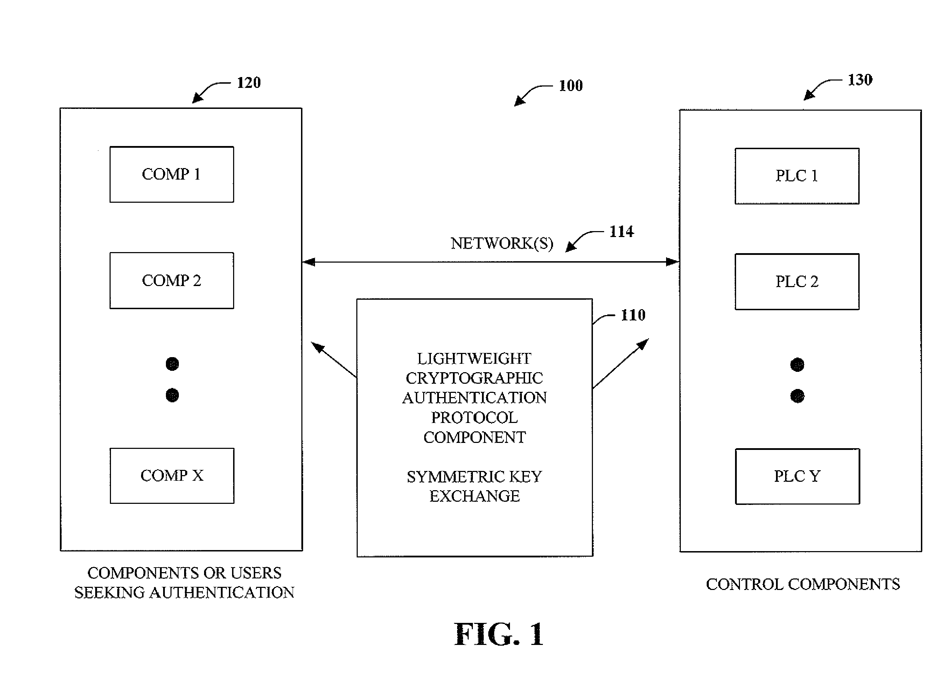

Referring initially to Fig. 1, a system 100 illustrates a lightweight cryptographic authentication protocol component 110 (hereinafter referred to as protocol component) for an industrial automation system. The protocol component 110 can be employed by two or more components/users to authenticate between such components across a network 114, where authenticate implies establishing a substantially secure and trusted connection to exchange data. As illustrated, components or users 120 may employ one or more computers, industrial components, or other network components that communicate across the network 114 to one or more industrial control components 130 such as represented by programmable logic controllers (PLCs) 130 (or other factory components as noted below).

In general, the protocol component provides a lightweight implementation of cryptographic primitives, The lightweight nature of the protocol component 110 facilitates improved efficiency such as reducing the code base of traditional solutions due in part to reducing communications with a third party or other trusted entities and also minimizes the number of crypto primitives that consume library space. Since communications with a trusted third party are reduced via the protocol component 110, authentication speed across the network 114 can be increased. The lightweight nature of the protocol also enables faster execution speeds and provides more features than other protocols. As will be described in more detail below, the protocol component 110 supports a simplified architecture than can reduce processing requirements of the system 100, for example.

As noted above, the protocol component 110 enables authentication between industrial control components 130 and components 120, to mitigate network protocol attacks, and to facilitate system performance of the components. In one aspect, a cryptographic authentication protocol is provided by the protocol component 110 that employs a mutual authentication scheme based in part on a symmetric key system that generally does not require a public key infrastructure to be present. The protocol is such that it is resistant to commonly known attacks. Additional features are provided that allow the protocol to be used to negotiate private sessions keys and encryption of subsequent transmissions. In this manner, a cryptographic-based authentication protocol provides a technical barrier to unauthorized applications and devices participating on an industrial automation network 114 that includes controllers, I/O modules, factory devices, computers, servers, clients, and/or other network components.

In general, the protocol component 110 provides strong and mutual authentication processes between components. This includes provisions for session management including signing and encryption. The lightweight nature minimizes the use of cryptographic primitives and generally does not require the use of clocks/calendars in the respective applications or devices. This also includes exportable world wide functionality. In a Dolev-Yao threat model for example, the protocol component 110 is generally not subject to replay; man in the middle; high jacking of authentication; or Lowe attacks. Furthermore, security generally does not depend on secrecy of protocol.

Before proceeding, it is noted that the components 120 can include various computer or network components such as servers, clients, communications modules, mobile computers, wireless components, control components and so forth which are capable of interacting across the network 114. Similarly, the term PLC as used herein can include functionality that can be shared across multiple components, systems, and or networks 114. For example, one or more PLCs 130 can communicate and cooperate with various network devices across the network 114. This can include substantially any type of control, communications module, computer, I/O device, sensor, Human Machine Interface (HMI)) that communicate *via* the network 114 which includes control, automation, and/or public networks. The PLC 130 can also communicate to and control various other devices such as Input/Output modules including Analog, Digital, Programmed/lntelligent I/O modules, other programmable controllers, communications modules, sensors, output devices, and the like.

The network 114 can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

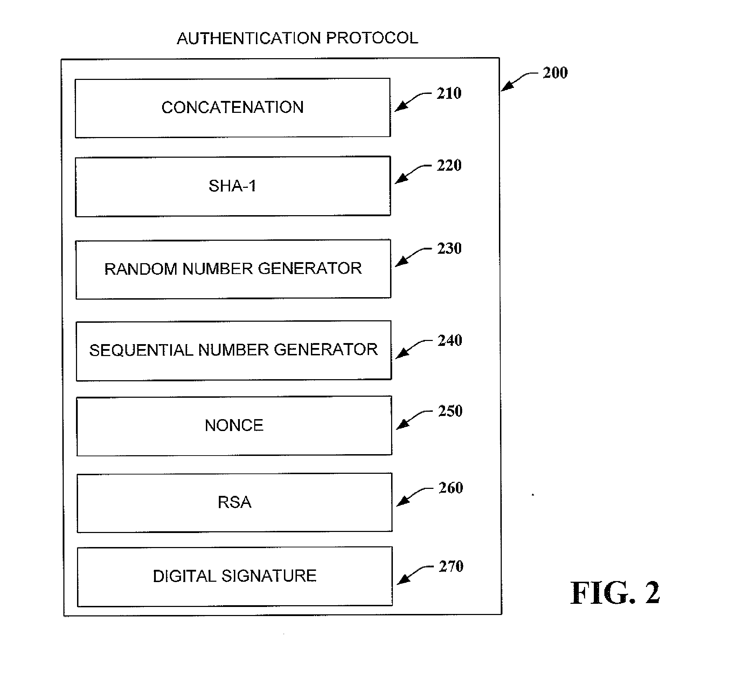

Referring now to Fig. 2, a various components of an authentication protocol 200 are illustrated. One or more of the following components can be used to create the authentication protocol 200. At 210, a concatenation component is provided. Concatenation is the combining of strings of characters by appending one to the other in the order shown. For example, concatenating "ABC" with "DEF" would yield "ABCDEF." Programmatically this operation is shown as "ABC" & "DEF". At 220, a hash algorithm is provided which is shown as SHA-1, for example. In this example, SHA-1 is a one way hash of a string of substantially any length that returns a 160 bit digest of the message. The digest has the principal properties of low collision rates (low chance of two different messages having the same digest) and it is not reversible to the original message. Programmatically this operation is shown as: Message Digest = SHA1 [message].

Another component of the authentication protocol 200 includes a Random Number Generator 230. The random number generator 230 is generally a complex algorithm that produces a random number. The randomness of the generator has profound effects on the security of the protocol, Programmatically this operation is shown as RNG_{X}. At 240, a Sequential Number Generator is provided. The sequential number generator 240 can be a simple algorithm that produces the next sequential number from the number generated in the previous call. The sequential number is allowed to wrap to zero and restart when the maximum sequential number is reached. Programmatically this operation is shown as SNG_{X}.

At 250, a nonce component is provided. The Nonce 250 is a message digest of the SHA1 hash of a random number, RNG, concatenated with a sequential number, SGN, both of which are generated by the device or application. Programmatically, a Nonce_{X} = SHA1 [RNG_{X} & SNG_{X}]. At 260, an RSA is provided which is an asymmetric (public/private key) encryption and decryption standard. The public key of owner X is designated as K_{X} while the private key of owner X is designated as K_{X}⁻¹. A message encrypted with a public key can be decrypted with a matching private key. Similarly, a message encrypted with a private key can be decrypted with a matching public key. Programmatically RSA is shown as: Message₂ = RSA [Message₁, K_{X}] where a Message₁ = RSA [Message₂, K_{X}⁻¹]. At 270, a digital signature is an RSA encrypted message of the SHA1 message digest of the message being signed. Programmatically the digital signature for participant X is DSIGN_{X} = RSA [SHA1 [message], K_{X}⁻¹]. It is noted that unless otherwise designated, DSIGN_{X} can be used to indicate the digital signature of the entire, immediate preceding message.

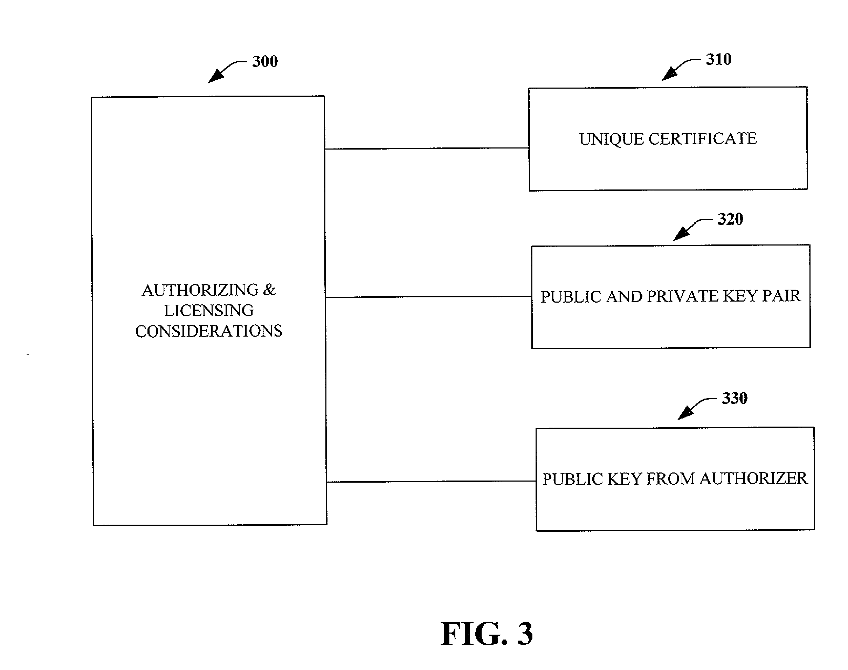

Turning to Fig. 3, authorizing and licensing considerations 300 for an authentication protocol are illustrated. Generally, all participants employing the cryptographic authentication protocol (CAP) discussed above are initially issued a unique certificate (CERT_{X}) 310 from an entity CA (cryptographic authorizer), a pair of public and private keys unique to the participant (K_{X} and K_{X}⁻¹) at 320, and a public key of the CA (K_{CA}) at 330. The certificate 310 can include the unique name of the participant (NAME_{X}); the public key of the participant (K_{X}); and a digital signature (DSIGN_{CA}) of the CA. Other data may be carried in the certificate 310 provided it is included in the calculation of the DSIGN discussed above. The private key of the participate (K_{X}⁻¹) and the public key of the CA (K_{CA}) at 320 are generally held in strong secrecy by the participant. Programmatically the minimum certificate for participant X is CERT_{X} = NAME_{X} & K_{X} & DSIGN_{CA.}

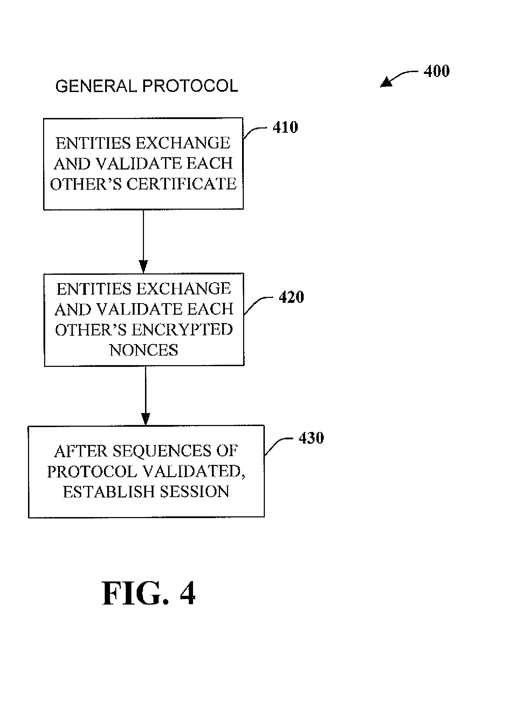

Figs. 4-6 illustrate an exchange process employing an authentication protocol for an industrial automation system. While, for purposes of simplicity of explanation, the methodologies are shown and described as a series of acts, it is to be understood and appreciated that the methodology is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

Fig. 4 illustrates a general authentication protocol exchange process 400. In general, exchange of an industrial authentication protocol occurs between one or more entities such as between an Entity1 and an Entity2. In the following examples illustrated in Figs. 4-6, Entity1 is also referred to as "Alice" and Entity2 is also referred to as "Bob," where the name Alice refers to a device or application associated with Entity and the name "Bob" refers to a device or application associated with Entity2. Thus, the process 400 depicts a generic exchange between Alice and Bob where authentication protocol exchanges are signed and the recipient validates the signature as well as the data integrity of each transmission. The protocol provides a mutual authentication of the parties as follows: At 410, Alice and Bob exchange and validate each other's certificate; at 420, Alice and Bob exchange and validate each other's encrypted nonces; and if the steps of the authentication protocol are sequentially validated, a session is established at 430.

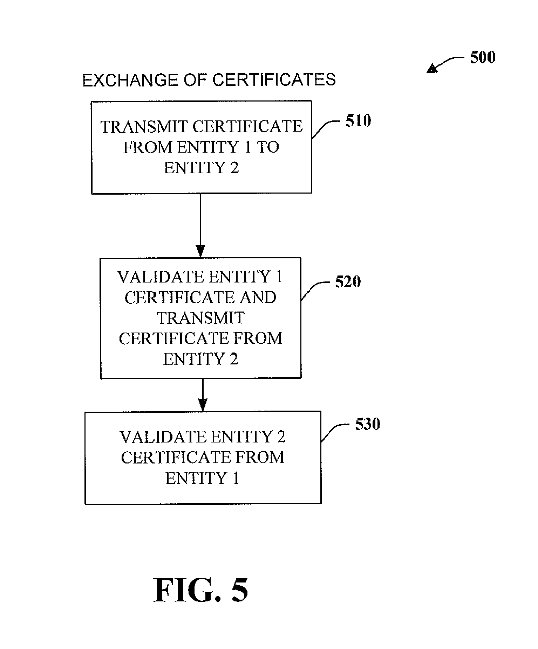

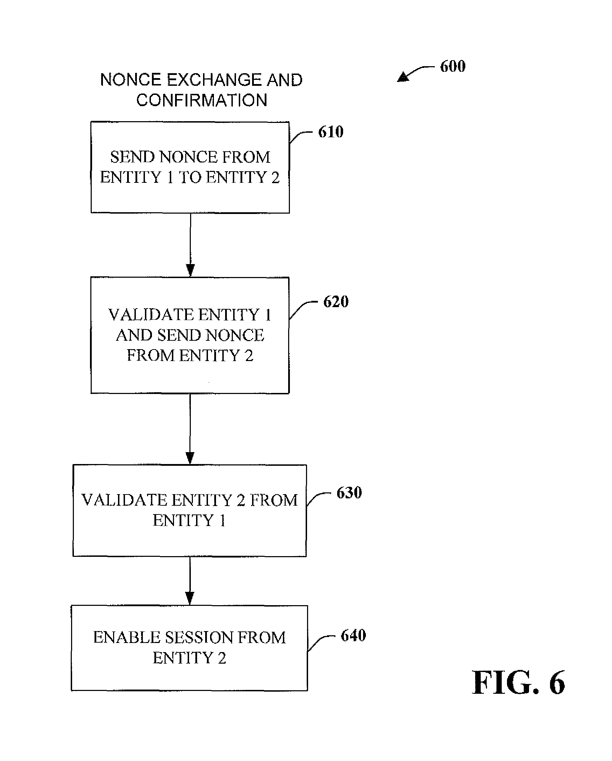

Fig. 5 illustrates a process 500 for exchanging certificates between entities. At 510, Alice transmits a Certificate. In this case, Alice transmits her certificate (CERT_{ALlCE)} to Bob. At 520, Bob validates Alice's Certificate and transmits a Certificate to Alice. Using the secretly held public key of the CA (K_{CA}), Bob validates the signature of the certificate and its data integrity. If not valid, Bob resets the protocol. If valid, Bob transmits his certificate (CERT_{BOB}). At 530, Alice validates Bob's Certificate. In this case, using the secretly held public key of the CA (K_{CA}), Alice validates the signature of the certificate and its data integrity. If not valid, Alice resets the protocol. If valid, Alice proceeds to the nonce exchange and authentication exchange depicted in Fig 6.

Fig. 6 illustrates a process 600 for nonce exchange and confirmation between entities. Proceeding from 530 of Fig. 5, Alice sends a Nonce to Bob at 610. Thus, Alice transmits her Nonce sequence: RSA [Nonce_{ALICE}, K_{BOB}] & NAME_{ALICE} & DSIGN_{ALICE}. At 620, Bob validates Alice and sends a Nonce. In this case, Bob validates the digital signature of Alice's message, its data integrity, and that the NAME matches that in Alice's certificate. If not valid at 620, Bob resets the protocol. If valid, Bob decodes Nonce_{ALICE} using K_{BOB}⁻¹. Bob responds with his Nonce sequence: RSA [Nonce_{ALICE} & Nonce_{BOB}, K_{ALICE}] & NAME_{BOB} & DSIGN_{BOB}. At 630, Alice validates Bob. Thus, Alice validates the digital signature of Bob's message, its data integrity, and that the NAME matches that in Bob's certificate. If not valid at 630, Alice resets the protocol. If valid, Alice decodes Nonce_{ALICE} and Nonce_{BOB} using K_{ALICE}⁻¹. If Nonce_{ALICE} as returned by Bob does not match Nonce_{ALICE} as sent by Alice earlier, Alice resets the protocol. If it matches, Alice responds with confirmation to Bob: RSA [Nonce_{BOB}, K_{BOB}] & NAME_{ALICE} & DSIGN_{ALICE}.

At 640, assuming the proceeding acts were validated, Bob allows a Session. In general, Bob validates the digital signature of Alice's message, its data integrity, and that the NAME matches that in Alice's certificate. If not valid at 640, Bob resets the protocol. If valid, Bob decodes Nonce_{BOB} using K_{BOB}⁻¹. If Nonce_{BOB} as returned by Alice does not match Nonce_{BOB} as sent by Bob earlier, Bob resets the protocol. If it matches, the mutual authentication is complete and the session may proceed between authenticated entities.

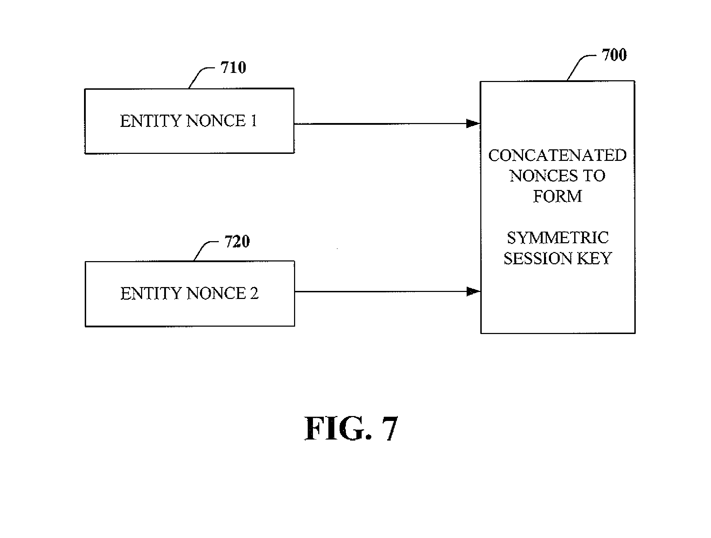

Now turning to Fig. 7, a system 700 illustrates a nonce concatenation to form a symmetric session key. In this case, nonces between entities such as between Entity1 at 710 and Enity2 at 720 (e.g., between Alice and Bob applications described above) can be concatenated at 700 to form a symmetric key, For example, the two Nonces described above, NonceALICE and NonceBOB, can be concatenated to form a symmetric key (KSYM) at 700. This is practical since neither Nonce is passed in the clear; Bob and Alice have knowledge of both Nonces; and the Nonces were generated by independent entities thereby increasing the randomness of the key. The symmetric key can be used for all transmissions after authentication to digitally sign the transmissions or to encrypt subsequent transmissions. A symmetric key results in significant speed improvements for these functions compared to using asymmetric keys. The negotiation for encryption and signing of transmissions can be accommodated during the exchange of nonces by appending desired features after NAME in the exchange.

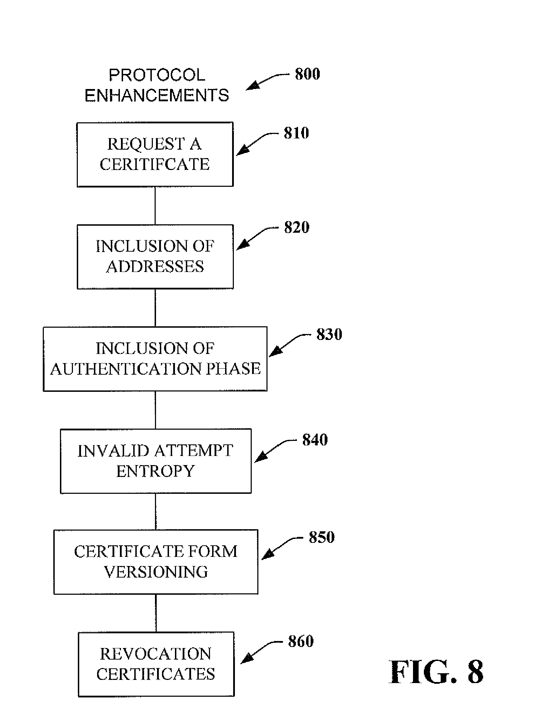

Fig. 8 illustrates exemplary authentication protocol enhancements 800 that can be employed. At 810, Request for Certificates are considered. Generally, the need to exchange certificates can become unnecessary when Alice and Bob have successfully passed the authentication protocol. This suggests that the protocol could be enhanced to only present a certificate upon request thereby freeing network bandwidth. If revocation certificates are utilized, a provision can be made to allow their presentation at any time. At 820, inclusion of addresses in the protocol are considered. The security of the system can be improved by including the logical or physical address of the device or application within each exchange. This will differentiate multiple instances of the same licensed device or application and can provide further protection against impersonation.

At 830, inclusion of an Authentication Phase may be provided. The possibility of having authentication steps out of phase between entities such as application or devices such as Alice and Bob in these examples may be reduced by including a unique authentication phase in each exchange by concatenating it after the NAME field. At 840, invalid attempt entropy may be provided. Security can be enhanced if Bob logs invalid certificates from Alice (and vice versa) and begins to geometrically lengthen time between retries. This will spoil attempts at spoofing certificates. Care should be exercised to prevent this from being used as a denial of service attack. At 850, certificate form versioning can be provided. In this case, the protocol may include a certificate version number in the body of the certificate to allow different decoding methods as requirements or circumstances dictate. This could also be used if the CA private key is compromised. At 860, a certificate form can be created that is a revocation certificate. This would require devices participating in the architecture to issue all known revocation certificates at the start of a session authentication. Thus, the devices register their own revocation certificates as well as those transmitted by others and then reject certificates that match the revoked list.

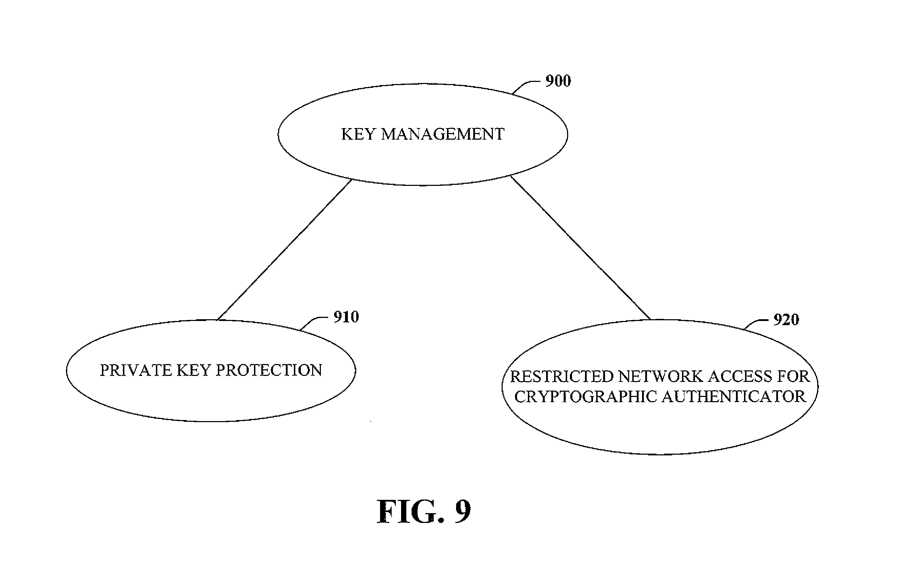

Referring to Fig. 9, exemplary key management aspects 900 are illustrated for an industrial authentication protocol. In one aspect at 910, the private key of the CA (K_{CA}⁻¹) should be strongly protected. Thus, substantially, the only use for this key is within the CA. A strongly protected, current copy of the K_{CA}⁻¹, a copy of all certificates issued, and a copy of all private keys issued should be maintained in a physically and logically secure environment well removed from the CA. At 920, network access to the CA should be restricted. In general, the CA should not be connected to any networks. Patching and updates to the CA should only occur if the function of the CA requires it to continue its ability to issue and maintain certificates. Access to the CA should be well controlled through physical and logical entry techniques. Media inserted into the CA for purposes of issuing certificates and backup should be certified to be blank and free of Malware or other extraneous/superfluous objects. It is desirable, but not essential, that the CA public key (K_{CA}) be held in confidence and well protected by all participants. Thus, the respective participants' public and private keys should be unique, not deterministic, and not predictable, where the NAME in each certificate should also be unique.

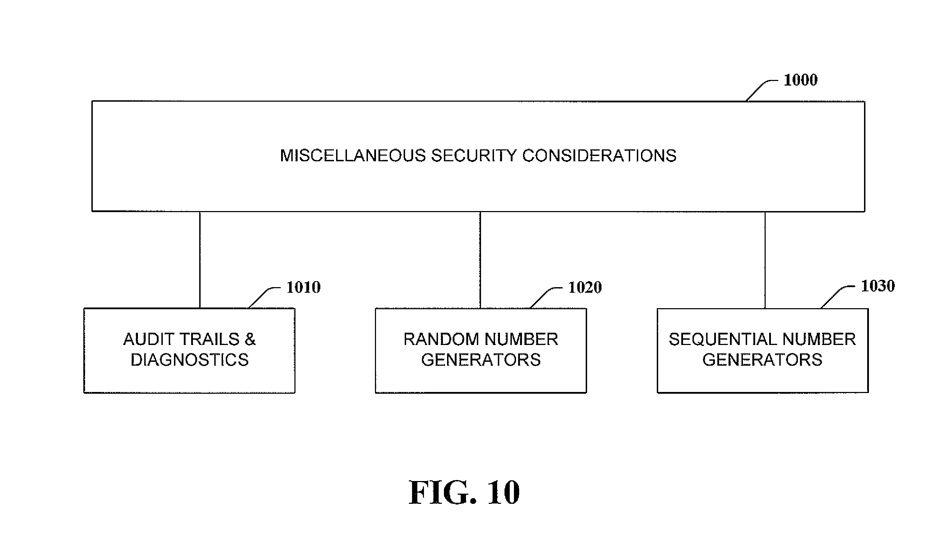

Fig. 10 illustrates miscellaneous security considerations for an industrial authentication protocol. In general, the considerations 1000 contemplate security breaches that should be considered in addition to the protocol aspects described above. Thus, at 1010 auditing and diagnostic aspects are considered in view of security for the overall system and particular authentication between entities. In general, secret information (e.g., private keys) should not be disclosed in any form in audit trails or diagnostic messages, for example. Consider a hash of a public key if some record is needed but one should not hash or otherwise reference a private key. Also, CA public keys should not be disclosed in an audit trail or diagnostic message. At 1020, Random Number Generators are considered in view of potential security concerns. One of the more significant contributors to the security of a protocol is the randomness of the random number generator. Therefore, care should be applied when using random number generators such that they are of uniform distribution, non-deterministic, and non-predictable, for example. In one case, to increase overall security, a minimum size for the random number generator can be specified. At 1030, Sequential Number Generators are considered in view of potential security threats. In this case it is desirable, though not required, that the serial number generator retain its last state if the respective application or device is reset or restarted.

It is noted that the above authentication protocols can be processed on various types of computing devices and resources, where some of these devices may be associated with an industrial control component and other devices associated with standalone or networked computing devices. Thus, computers can be provided to execute the above protocols that include a processing unit, a system memory, and a system bus, for example. The system bus couples system components including, but not limited to, the system memory to the processing unit that can be any of various available processors. Dual microprocessors and other multiprocessor architectures also can be employed as the processing unit.

The system bus can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory includes volatile memory and nonvolatile memory. The basic input/output system (BIOS), containing the basic routines to transfer information between elements within the computer, such as during start-up, is stored in nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Computing devices also includes removable/non-removable, volatile/non-volatile computer storage media.

It is to be appreciated that software components can be provided that act as an intermediary between users and the basic computer resources described in suitable operating enviromnent. Such software includes an operating system which can be stored on disk storage, acts to control and allocate resources of the computer system. System applications take advantage of the management of resources by operating system through program modules and program data stored either in system memory or on disk storage. It is to be appreciated that the present invention can be implemented with various operating systems or combinations of operating systems or shared with control systems.

Computers can operate in a networked environment using logical connections to one or more remote computers, such as remote computer(s). The remote computer(s) can be a personal computer, a server, a router, a network PC, a workstation, a microprocessor based appliance, a peer device or other common network node and the like, and typically includes many or all of the elements described relative to computer. Remote computers can be logically connected through a network interface and then physically connected *via* communication connection. Network interfaces encompass communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL), and wireless networks.

The systems described above employing the authentication protocols can include one or more client(s). The client(s) can be hardware and/or software (e.g., threads, processes, computing/control devices). The systems can also include one or more server(s). The server(s) can also be hardware and/or software (e.g., threads, processes, computing/control devices). The servers can house threads to perform transformations by employing the authentication protocol, for example. One possible communication between a client and a server may be in the form of a data packet adapted to be transmitted between two or more computer processes.

What has been described above includes various exemplary aspects. It is, of course, not possible to describe every conceivable combination of components or methodologies for purposes of describing these aspects, but one of ordinary skill in the art may recognize that many further combinations and permutations are possible. Accordingly, the aspects described herein are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary of the invention an authentication protocol for an industrial automation system is provided. This includes at least one industrial control component that communicates security information across a network. At least one protocol component is provided that employs mutual authentication data that is based in part on a private key exchange to facilitate authentication of the industrial control component via the network.

## Claims

1. An authentication protocol for an industrial automation system, comprising:
at least one industrial control component that communicates security information across a network; and
at least one protocol component that employs mutual authentication data that is based in part on a private key exchange to facilitate authentication of the industrial control component via the network.

2. The system of claim 1, the private key exchange is a symmetric key exchange.

3. The system of claim 1 or 2, the private key exchange is associated with a public key component.

4. The system of claim 1, 2 or 3 further comprising employing a reduced subset of cryptographic primitives to facilitate authentication.

5. The system of one of claims 1 to 4, the protocol component employs a cryptographic authentication protocol.

6. The system of one of claims 1 to 5, further comprising a component to negotiate private session keys and provide encryption of subsequent transmissions.

7. The system of one of claims 1 to 6, the protocol component includes provisions for session management including signing and encryption functions.

8. The system of one of claims 1 to 7, a concatenation component to combine of strings of authentication characters.

9. An authentication method for industrial control components, comprising:
validating digital certificates between at least two entities;
validating encrypted nonces between the at least two entities; and
establishing a session between the at least two entities based in part on the digital signatures, the encrypted nonces, and at least a portion of an authentication sequence that includes a private session key.

10. The method of claim 9, further comprising combining the private session key with a public session key.
